# EUROPEAN PATENT APPLICATION

(11) **EP 1 992 364 A1**
(43) Date of publication of application: **19.11.2008**
(21) Application number: 07425286.7
(22) Date of filing: 16.05.2007
(51) Int. Cl.: A61K 47/48, C08B 11/12, C08B 31/10, C08B 37/00, C08B 37/04, C08B 37/08

(54) **Carboxylated polysaccharides phosphated or bisphosphonated derivatives, optionally cross-linked, and their preparation and biomedical uses**

(71) Applicant: Biosuma S.r.l., 53100 Siena (IT)
(72) Inventor: Barbucci, Rolando, 53100 Siena (IT)
(74) Representative: Minoja, Fabrizio

(57) **Abstract**

Disclosed are carboxylated polysaccharides phosphated or diphosphonated derivatives and hydrogels obtainable by reaction of said polysaccharides with a crosslinker, and the use of said hydrogels as carriers in the preparation of pharmaceutical formulations.

## Description

The present invention relates to carboxylated polysaccharides phosphated or bisphosphonated derivatives, optionally cross-linked, and their preparation and biomedical uses.

### Background to the invention

Natural and semisynthetic polymers are widely used in various sectors in view of their chemico-physical, technological and biological properties, and the low cost of the raw materials.

The fields in which these compounds are mainly employed are the food industry, in which they are used as thickeners, viscosity-controlling agents, buffers, etc., and the pharmaceutical industry, in which they are used to coat tablets and capsules and as topical gels with controlled release of the active constituents. Their use in the biomedical field is particularly interesting because these compounds are biocompatible and in some cases biodegradable.

Macromolecules of natural origin which are widely used include alginic acid (AA), cellulose and guar, while those of semisynthetic origin are their derivatives, such as carboxymethylcellulose (CMC), carboxymethyl-starch (CMS), amidic carboxymethylcellulose (CMCA), amidic alginic acid (AAA), and sulphated derivatives of guar and alginic acid.

The characteristics and properties of these polymers can be modified with a derivatisation reaction, as described in EP 1614696, which contemplates the amidation of CMC, AA and CMS and their crosslinking.

The modifications made mean that they can be exploited, especially in the field of tissue engineering, as cell scaffolds for tissue regeneration. Moreover, the low cost of the raw materials and their derivatives justifies their widespread use in the food, pharmaceutical, medical and cosmetic fields.

### Description of the invention

The first object of the invention relates to carboxylated polysaccharides phosphated or diphosphonated derivatives, in particular carboxymethylcellulose, alginic acid, carboxymethyl-starch, guar, amidic carboxymethylcellulose, amidic alginic acid and hyaluronic acid.

The phosphated derivatives according to the invention could be crosslinked by inter- or intra-molecular reaction between the carboxyl groups and alcohol groups present on the polymer, suitably activated.

The second object of the invention relates to hydrogels obtainable by crosslinking a carboxylated polysaccharide selected from carboxymethylcellulose, alginic acid, carboxymethyl-starch, guar, amidic carboxymethylcellulose and amidic alginic acid, with a diepoxy crosslinker.

Carboxylated polysaccharides can be phosphated starting with the polysaccharide sodium salt, and using trisodium trimetaphosphate (STMP) or orthophosphoric acid as phosphating agent. Bisphosphonation can be performed with the use of a suitable diphosphonic acid (dP), in particular clodronic, alendronic, pamidronic and etidronic acid and similar. The factors which determine the degree of derivatisation are the concentration of the initial solution and the stoichiometric amount of the phosphating or bisphosphonating agent.

The phosphating reaction can be conducted in an aqueous medium, in the presence of an alkali hydroxide or carbonate, at a temperature between 10 and 70°C, and preferably at room temperature. With orthophosphoric acid, the reaction proceeds with the addition of urea at room temperature. The number of phosphate groups per repeating unit of the polysaccharide will depend on the molar ratio of the phosphating agent. Typically, the number of phosphate groups per repeating unit will be between 1 and 3 on average. The molar ratio of the phosphating agent will be approximately between 1 and 10 per mole of polysaccharide.

The bisphosphonation can similarly be conducted in water on alkaline salts, preferably sodium salts, of the polysaccharides, which are preactivated with reagents such as N-hydroxysuccinimide (NHS) and 1-ethyl-3-(3-dimethy-aminopropyl)-carbodiimide (EDC) or similar.

The phosphation or bisphosphonation is evaluated by IR spectroscopy. The characteristic bands of the phosphated polymer are the band at 1090 cm⁻¹ due to stretching of P-O-R, the band between 1000 -900 cm⁻¹ due to stretching of P-O-P, and the band that falls around 1150 cm⁻¹ due to stretching of P=O.

Rheological analysis indicates that the phosphated derivatives according to the invention have higher viscous modulus (G') and modulus of elasticity (G") values than the native polysaccharide. The presence of phosphate or bisphosphonate groups determines their use in the field of bone tissue regeneration as biomimetic materials which promote osteointegration and osteoinduction. Bisphosphonates, which are powerful bone resorption inhibitors, are widely used for the treatment and prevention of osteoporosis and other disorders characterised by increased bone remodelling.

The crosslinkers which can be advantageously used according to the invention, for the crosslinking phosphated or bisphosphonated derivatives, or the starting carboxylated polysaccharides (except for hyaluronic acid), in order to prepare non-phosphated hydrogels are in particular 1-2,7-8 diepoxyoctane (DEO), 1-2,3-4 diepoxybutane (DEB) and polyethylene glycol diglycidyl ether (PEGDGE), which are able to bond, depending on the reaction environment, with both carboxyl groups and alcohol groups present on the polysaccharide.

Crosslinking can take place through the carboxylated groups previously activated with EDC or with 6-dimethoxy-1,3,5-triazin-2-yl)-4-methylmorpholinium chloride (DMTMM). The degree of crosslinking of the compounds obtained is determined by the stoichiometric amount of activator and crosslinker; for example with EDC, the amount added varies from 5 to 100% of the carboxyl groups present on the polysaccharide, whereas the DAP is used in an half amount respect to the added EDC and consequently respect to the activated carboxyl groups.

The crosslinking is evaluated by IR spectroscopy, and the degree of crosslinking with potentiometry and/or NMR.

The hydrogels obtained by crosslinking with the above-mentioned diepoxy agents have different chemico-physical properties, which enable them to be used in various sectors. Moreover, their use is encouraged by the low manufacturing costs and simple synthesis processes. The use of these procedures offers considerable advantages because it reduces manufacturing times, does not require the use of organic solvents, does not cause the formation of toxic by-products, and provides high yields.

The derivatives according to the invention have characteristics of viscosity, solubility in water and swelling different from those of the starting carboxylated polysaccharide.

It has also been demonstrated that both phosphating and crosslinking of polymers reduces the swelling of the compound; in particular, crosslinked guar gum swells less than non-crosslinked polymer, and this characteristic makes it particularly suitable for use as a carrier for pharmaceutical formulations.

The invention is illustrated in greater detail in the examples below.

### EXAMPLES

### Example 1

### Carboxymethylcellulose (CMC) phosphated with trisodium trimetaphosphate (STMP)

Sodium CMC was slowly dissolved in water (1% w/v) under magnetic stirring, and a 0.5M NaOH aqueus solution was added till pH = 12. In order to introduce two phosphate groups for each repeating unit, STMP was added in ratio 2:3 respect to CMC. The mixture was stirred at room temperature for about 2h, maintaining pH=12 by the addition of 0.5N NaOH. The polymer was then dialysed against doubly distilled water for 24-48h and characterised by IR spectra and microscopy.

### Example 2

### Carboxymethylcellulose (CMC) diphosphated with 1-ethyl-3-(3-dimethylaminopropyl)-carbodiimide (EDC), N-hydroxysuccinimide (NHS) and bisphosphonates (dP)

Sodium CMC was slowly dissolved in water (1% w/v) under magnetic stirring, and NHS was added to the solution (ratio of 1:1 with the polymer). An aqueous solution of HCL 0.5M was added till pH = 4.75, then EDC was added to the mixture to activate the chosen amount of carboxylic group (10%), and the required amount of alendronate was added. The mixture was stirred at room temperature for about 2h. The polymer was finally dialysed against doubly distilled water and characterised by IR spectra and microscopy.

### Example 3

### Guar gum crosslinked with polyethylene glycol diglycidyl ether (PEGDGE)

Guar gum was slowly dissolved in a 0.1 M NaOH aqueous solution (1% w/v), under magnetic stirring. The temperature was increased to 40°C and the required amount of PEGDG (guar gum/PEGDG ratio of 1:3) was added. The mixture was stirred for 14h. The product was dispersed in H₂O and neutralised with acetic acid (96%), pH 7. The hydrogel was washed with H₂O, filtered and freeze-dried.

The hydrogel was characterised by IR spectra, microscopy, rheometry, degree of swelling, viscosimetry, porometry and SEM.

### Example 4

### Alginic acid crosslinked with polyethylene glycol diglycidyl ether (PEGDGE)

Sodium alginate was slowly dissolved in a 0.1M HCI aqueous solution (4% w/v), under magnetic stirring. The temperature was increased to 60°C and the required amount of PEGDGE (sodium alginate/PEGDGE ratio of 1:2) was added. The mixture was stirred for 14h. The hydrogel was washed with H₂O, bringing the pH to 7, filtered and freeze-dried.

The hydrogel was characterised by IR spectra, microscopy, rheometry, degree of swelling, viscosimetry, porometry and SEM.

### Example 5

### Alginic acid crosslinked with 1,2,7,8-diepoxyoctane (DEO)

Sodium alginate was slowly dissolved in a 0.1M HCl or 0.1M NaOH aqueous solution (4% w/v), under magnetic stirring. The temperature was increased to 60°C and the required amount of DEO (sodium alginate/DEO ratio of 1:4) was added. The mixture was stirred for 14h. The hydrogel was washed with H₂O, bringing the pH to 7, filtered and freeze-dried.

The hydrogel was characterised by IR spectra, microscopy, rheometry, degree of swelling, viscosimetry, porometry and SEM.

### Example 6

### Carboxymethylcellulose (CMC) crosslinked with polyethylene glycol diglycidyl ether (PEGDGE)

CMC was slowly dissolved in 0.1M HCl aqueous solution (1.5% w/v), under magnetic stirring. The temperature was increased to 60°C and the required amount of PEGDGE (CMC/PEGDGE ratio of 1:1) was added. The mixture was stirred for 14h. The hydrogel was washed with H₂O, bringing the pH to 7, filtered and freeze-dried.

The hydrogel was characterised by IR spectra, microscopy, rheometry, degree of swelling, viscosimetry, porometry and SEM.

### Example 7

### Carboxymethylcellulose (CMC) crosslinked with 1,2,7,8-diepoxyoctane (DEO)

CMC was slowly dissolved in an 0.1M HCl aqueous solution (1.5% w/v), under magnetic stirring. The temperature was increased to 60°C and the required amount of DEO (CMC/DEO ratio of 1:4) was added. The reaction continued for 14h. The hydrogel was washed with H₂O, bringing the pH to 7, filtered and freeze-dried.

The hydrogel was characterised by IR spectra, microscopy, rheometry, degree of swelling, viscosimetry, porometry and SEM.

### Example 8

The ammonium salt of (4-(4,6-dimethoxy-1,3,5-triazin-2-yl)-4-methylmorpholinium chloride (DMTMM) reacts with carboxyl groups and can therefore be used as activator of said groups. After preparing an aqueous solution of the polymer, 1.5% CMC in water, without any buffer, the activator DMTMM and the chosen nucleophile in this case the crosslinker 1,3 diaminopropane (DAP) (CMC/DAP 1:1) were added, and the solution was stirred at room temperature for a maximum of 12 hours. The gel obtained was then purified and analysed by IR spectroscopy (after freeze-drying).

### Example 9

a) Preparation of reagent: an aqueous solution of 85% (ortho)phosphoric acid was prepared with a concentration of 2M, and this volume of solution was considered for the addition of urea, to obtain the final reagent with a concentration of 4M (or 2M) urea; the solution was stirred for approximately an hour.
b) Phosphatation of polymer: a 1.5% solution of polymer in the phosphoric acid and urea solution was prepared and left under stirring for 3h. As the products of the esterification reaction with the acid can either remain as such or also give esterification reactions of the hydroxyls bonded to the P, and consequently crosslink, the amount and concentration of acid used to obtain the derivative with 2 free hydroxyls (and at most the derivative with only one free hydroxyl) must be checked. It is known that the amount of free hydroxyl groups declines as the concentration of (ortho)phosphoric acid increases.

The polymer solution was dialysed in distilled water to remove the excess acid and urea, freeze-dried, and analysed with IR spectroscopy.

## Claims

1. Carboxylated polysaccharides phosphated or bisphosphonated derivatives, optionally crosslinked.

2. Derivatives as claimed in claim 1, wherein the carboxylated polysaccharides are selected from carboxymethylcellulose, alginic acid, carboxymethyl-starch, guar, amidic carboxymethylcellulose, amidic alginic acid and hyaluronic acid.

3. Derivatives as claimed in claim 1 or 2, phosphated by reaction of the polysaccharide sodium salt with trisodium trimetaphosphate or orthophosphoric acid.

4. Derivatives as claimed in claim 1 or 2, bisphosphonated by reaction of the polysaccharide activated at the carboxyl group with 1-ethyl-3-(3-dimethylaminopropyl)-carbodiimide and N-hydroxysuccinimide (NHS) and subsequent reaction with a diphosphonate.

5. Derivatives as claimed in any of claims 1-4, in crosslinked form.

6. Biomimetic materials that promote osteointegration and osteoinduction, comprising the derivatives claimed in claims 1-5.

7. Hydrogels obtainable by crosslinking a carboxylated polysaccharide selected from carboxymethylcellulose, alginic acid, carboxymethyl-starch, guar, amidic carboxymethylcellulose and amidic alginic acid with a diepoxy crosslinker.

8. Hydrogels as claimed in claim 7, wherein the crosslinker is selected from 1-2,7-8 diepoxyoctane, 1-2,3-4 diepoxybutane and polyethylene glycol diglycidyl ether.

9. Use of the hydrogels claimed in claims 7-8 as a carrier for pharmaceutical formulations.
